(19)

**Europäisches Patentamt**
**European Patent Office**
**Office européen des brevets**

(11) **EP 4 706 788 A1**

(12) **EUROPEAN PATENT APPLICATION**

(43) Date of publication:
**11.03.2026 Bulletin 2026/11**

(21) Application number: **25200219.1**

(22) Date of filing: **04.09.2025**

(51) International Patent Classification (IPC):
**A63B 17/02** (2006.01)    **A63B 21/005** (2006.01)
**A63B 21/078** (2006.01)    **A63B 21/00** (2006.01)
**A63B 23/04** (2006.01)    **A63B 23/12** (2006.01)
**A63B 24/00** (2006.01)    **A63B 21/062** (2006.01)

(52) Cooperative Patent Classification (CPC):
**A63B 17/02; A63B 21/0058; A63B 21/0626;**
**A63B 21/078; A63B 21/4043; A63B 21/4045;**
**A63B 23/0405; A63B 23/1209; A63B 24/0062;**
**A63B 24/0087;** A63B 21/002; A63B 21/0023;
A63B 21/0783; A63B 23/03525; A63B 2023/0411;
(Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **10.09.2024 US 202463692783 P**

(71) Applicants:
• **The University of Hong Kong**
**Hong Kong (HK)**
• **City University of Hong Kong**
**Hong Kong (HK)**

(72) Inventors:
• **XI, Ning**
**Hong Kong (HK)**
• **CHEN, Jiangcheng**
**Hong Kong (HK)**
• **YANG, Guo**
**Hong Kong (HK)**
• **ZOU, Kehan**
**Hong Kong (HK)**
• **CHEN, Yuetian**
**Hong Kong (HK)**
• **LOU, Weiqun**
**Hong Kong (HK)**
• **LAI, King Wai Chiu**
**Hong Kong (HK)**
• **QU, Zijia**
**Hong Kong (HK)**

(74) Representative: **Matter IP Limited**
**c/o Impetus IP Ltd**
**Office One, Ridgecombe Barn**
**Lifton, Devon, PL16 0HD (GB)**

(54) **APPARATUS, SYSTEM FOR STRENGTH AND CONDITIONING TRAINING**

(57)    A system for strength and conditioning training. The system comprises an exercise rack, a load regulation assembly mounted on the rack, the load regulation assembly is moveable relative to the rack, and; wherein the load regulation assembly is configured to receive and support a weight, and; wherein the load regulation assembly is configured to adjust the magnitude and/or direction of an applied load.

Fig.2

EP 4 706 788 A1

(52) Cooperative Patent Classification (CPC): (Cont.)
A63B 2024/0093; A63B 2071/0081;
A63B 2071/0683; A63B 2220/16; A63B 2220/51;
A63B 2220/52; A63B 2220/805; A63B 2220/806;
A63B 2225/20; A63B 2225/50

## Description

### TECHNICAL FIELD

The present invention relates to a system for strength and conditioning training.

### BACKGROUND

Exercise and training have become more popular due to increased awareness of the benefits of weight training and resistance training. Barbells are an example of a common tool used for resistance training.

Current strength and conditioning training usually use to perform isotonic exercise due to the limitation of the current training equipment. Existing strength and conditioning tools such as barbells or dumbbells, are usually only capable of isotonic training because the weight of the barbell is constant. It is inconvenient to adjust the weight and it is not possible to change the weight of the load during training. The loaded force of the barbells is only be directed downwards and gravity provides the resistance.

Existing training programs of strength and conditioning training is monotonous. With barbells or dumbbells, it is difficult to achieve isokinetic training, as the resistance level cannot be changed. Additionally, with free weights (e.g., barbells or dumbbells) there is no easy way to control a user's movements to be of a constant speed and no way to match the amount of force applied by a user. This makes performing isokinetic training with barbells or dumbbells not easily possible. Existing training plans and performance evaluations provided by coaches or trainers are highly subjective and empirical.

Commonly used exercise machines such as for example, a Smith machine, cannot achieve or perform isokinetic exercise. This is because there is no way in a Smith machine to continuously modify the load. Further commonly used exercise machines like the Smith machine make it challenging to implement isometric exercise in different positions.

The Smith machine itself is unable to collect training data during training for analysis purposes. Additionally, it fails to provide adequate safety protection for athletes during any extreme training exercises, thereby increasing the risk of injuries.

The currently available isokinetic dynamometers, like Biodex, are measurement-based machines capable of conducting isotonic, isokinetic, and isometric exercises. However, their use is limited to standardized single-joint testing and training for the human body. They do not support complex multi-joint training in strength and conditioning exercises.

### SUMMARY OF THE INVENTION

In accordance with a first aspect, the present invention relates to a system for strength and conditioning training, comprising:

> an exercise rack,
> a load regulation assembly mounted on the rack,
> the load regulation assembly is moveable relative to the rack, and;
> wherein the load regulation assembly is configured to receive and support a weight, and;
> wherein the load regulation assembly is configured to adjust the magnitude and/or direction of an applied load.

In one example, the system comprises a controller operatively coupled to the load regulation assembly, and wherein the controller is configured to control the load regulation assembly to adjust the magnitude and/or direction of the applied load based on a selected exercise type.

In one example, the weight may be a barbell, or one or more kettlebells, or one or more dumbbells, or one or more weight plates.

In one example, the load regulation assembly is configured to adjust the applied load such that a user can perform two or more exercise types, wherein the two or more exercise types are selectable from: isokinetic exercise, isometric exercise and isotonic exercise.

In one example, the load regulation assembly is configured to adjust the applied load such that the user can perform one or more of: isokinetic (concentric only) or isokinetic (concentric and eccentric) exercises.

In one example, the load regulation assembly is configured to adjust the applied load such that a user can perform one of the following exercises:

> Isotonic deadlift,
> Variable resistance deadlift,
> Isokinetic deadlift (concentric only),

Isokinetic deadlift (concentric and eccentric),
Isometric deadlift,
Isotonic squat,
Variable resistance squat,
Isokinetic squat (concentric only),
Isokinetic squat (concentric and eccentric),
Isometric squat,
Isotonic bench press,
Variable resistance bench press,
Isokinetic bench press (concentric only),
Isokinetic bench press (concentric and eccentric),
Isometric bench press,
Isotonic horizontal push-pull,
Isokinetic horizontal push-pull (concentric only),
Isokinetic horizontal push-pull (concentric and eccentric),
Fixed trajectory exercise,
Arbitrary trajectory exercise,
Ballistic exercise,
Kick exercise, and;
Bench pull exercise.

In one example, the load regulation assembly is configured for two translational degrees of freedom such the load regulation assembly is configured to move the weight supported by the load regulation assembly in two translational degrees of freedom and three passive rotational degrees of freedom.

In one example, the load regulation assembly comprising:

at least two motors,
the controller operatively coupled to each motor,
wherein the controller is configured to control each of the motors based on a user selected exercise to move the load regulation assembly to allow the user to perform the selected exercise.

Optionally, the system may comprise four motors. Two motors that are adapted to control vertical movement of the load regulation assembly and two motors adapted to control the horizontal motion of the load regulation assembly.

In one example, the system comprising:

a plurality of optical sensors disposed on the rack,
each optical sensor arranged in communication with the controller,
each of the optical sensors oriented to sense a motion or position of a user or sense a motion of the weight supported to the load regulation assembly, and;
the controller is configured to detect an unsafe condition and trigger the motors to stop if an unsafe condition is detected.

In one example, the optical sensors may be infrared sensors. Alternatively, the system may comprise one or more acoustic sensors e.g., ultrasonic sensors that are mounted on the rack and arranged in communication with the controller.

In one example, the system comprises at least two optical sensors that are configured to monitor the vertical movement of the weight (e.g., a barbell) and at least one optical sensor adapted to monitor the horizontal movement of the weight.

In one example the applied load is controlled by at least the two motors that are adapted to control the vertical movement. The higher the force applied by the vertical motors the greater the applied load.

In one example, the system comprising:

one or more sensors located on the load regulation assembly and configured to measure training data generated by the user while performing an exercise,
the one or more sensors are arranged in communication with the controller, and;
the controller configured to determine one or more athletic performance parameters based on the measured training data from the one or more sensors.

In one example the one or more sensors may be mounted on the load regulation assembly to measure the force of interaction between the user and the weight.

In one example, the one or more sensors may be force sensors, such as for example load cells or strain gauges.

In one example, the system comprises a platform, wherein the rack is positioned on the platform and the platform providing a surface for the user to stand upon and perform an exercise. The platform may comprise one or more embedded sensors to measure the plantar force exerted by a user.

In one example the force sensors disposed on or embedded within the load regulation assembly may be positioned adjacent or within the weight and may be configured to measure the force of interaction between the user and weight.

In one example the system comprises two force sensors on each side of the weight. The sensors may be mounted on the inside of the weight on both sides. The weight may be a barbell and the sensors may be mounted on the inside of the barbell on both sides.

In a further example, the force sensors may be mounted in the weight receptacle.

In one example, the system comprises two force platforms. The two force platforms can be used to measure the force of the left and right feet from the user respectively.

In one example the force platform may determine forces in three dimensions. The two force platforms may be 3D force platforms configured to measure force from the left and right foot of the user.

In one example the system comprising:

one or more cameras positioned on the rack,
each camera arranged in communication with the controller,
each camera configured to capture one or more images or a video of a user's body while performing the selected exercise,
the controller configured to receive the one or more images or the video, determine one or more angles between a user's body parts while performing the selected exercise and controlling the load regulation assembly to regulate the applied load based on the determined angles.

In one example the system comprises four cameras mounted on the exercise rack. The cameras are configured to capture angles of a user's (e.g., an athlete's) body e.g., the angle at the elbow joints or knee joint angle.

In one example, the system comprises four cameras mounted on the rack.

In one example two cameras are located along an upper portion or an upper rail of the exercise rack, and two cameras are located along a lower portion or lower rail of the exercise rack. One camera may be positioned directly above and vertically aligned with another camera. The cameras may be arranged as camera pairs i.e.; one lower camera and one upper camera may define a camera pair.

In one example the system, comprising:

a mobile device,
the controller configured to communicate with the mobile device,
the mobile device comprising a user interface that is adapted to allow a user to select one or more exercises and set one or more training parameters,
the mobile device further configured to transmit the selected exercise and set training parameters to the controller, and;
wherein the mobile device is configured to receive athletic performance parameters and training data from the controller and present the athletic performance parameter and/or training data on the user interface.

In one example, the mobile device may be a tablet or a smartphone.

In one example, the system comprises an exercise analysis server that is arranged in electronic communication with the controller and configured to receive training data and/or images or video of the user performing an exercise from the controller.

Alternatively, the exercise analysis server may be configured to receive training data from the one or more sensors located on the platform or the sensors located on the load regulation assembly, and/or the images or video from the one or more cameras.

In one example, the exercise analysis server is configured to determine athletic performance parameters based on the received training data and/or based on the received one or images or video of the user performing an exercise.

In one example, the system may comprise at least one IMU and an EMG. Preferably the system comprises two IMUs. The IMUs may be mounted on the weight receptacle or directly on the weight.

In one example, one IMU may be mounted on each side of the weight. In this example, one IMU may be mounted on either side of a barbell, wherein the weight is a barbell.

In one example the EMG may be mounted on the user. The IMU and EMG may be adapted to wirelessly communicate with the controller and/or the exercise analysis server. The controller or server may be configured to process the received IMU data to determine acceleration of a user's (i.e., athlete's) movement. The controller or server may be further configured to process the EMG data to determine activation of the user's muscles.

In one example, the system comprises two IMUs. The two IMUs may be mounted on load regulation assembly. In one example each IMU may be mounted adjacent a weight receptacle. Alternatively, the IMUs may be mounted on the weight e.g., barbell.

Optionally, in one example the platform may be a force platform comprising embedded sensors. The force platform may be configured to measure a plantar force exerted by the user while performing an exercise.

In one example, at least one sensor may be located on an upper surface i.e., a working surface of the platform and at least one sensor may be embedded within the platform. The upper surface or working surface is the surface of the platform that a user interacts with e.g., stands on, sits on, kneels on, lies on or any other interaction.

The controller or server may be configured to utilize multiple types of sensor data and the camera images or video to determine athletic performance of the user.

In one example the controller comprises a processor and a memory unit. In one example the exercise server comprises a processor (or processing unit), a memory unit, a communication module for communicating with other devices e.g., sensors or the controller via a communication network and a display to present information. The server may transmit the determined athletic performance to the controller or the mobile device, or the server may present the determined athletic performance on its own display.

In one example, the controller is configured to provide hybrid force-position control of the lead regulation assembly. In particular the controller is configured to control the motors to compensate for gravity, static friction, dynamic friction and inertia. The controller may be configured to control the motors to move the load regulation assembly along a fixed trajectory or an arbitrary trajectory, thereby moving the weight along a fixed or arbitrary trajectory. This movement of the weight allows the load regulation assembly to control the applied load direction. The controller may be further configured to control the motors to adjust the magnitude of the applied load. The controller may be further configured to control the motors to adjust the direction of the applied load.

In one example, the training data and/or athletic performance of the user may be presented on the mobile device or on a display in real time. This allows for real time feedback to the user regarding their performance.

The system for strength and conditioning training is advantageous because it is capable of providing isotonic exercise and variable resistance exercise, isokinetic exercise (concentric and eccentric), and isometric exercise. The system is also advantageous because the system is configured to adjust the load i.e., applied load to a user during a user's exercise (e.g., during isokinetic exercise), which can reduce the risk of injury.

In accordance with a further aspect, there is provided a system for strength and conditioning training of a user, comprising:

an exercise rack,
a load regulation assembly mounted on the rack,
the load regulation assembly is moveable relative to the rack, and;
wherein the load regulation assembly is configured to receive and support a weight,
wherein the load regulation assembly is configured to adjust the magnitude and/or direction of an applied load,
a controller operatively coupled to the load regulation assembly, wherein the controller is configured to control the load regulation assembly to adjust the magnitude and/or direction of the applied load based on a selected exercise type,
wherein the load regulation assembly is configured for two translational degrees of freedom such the load regulation assembly is configured to move the weight supported by the load regulation assembly in two translational degrees of freedom and three passive rotational degrees of freedom,
wherein the load regulation assembly is configured to adjust the applied load such that a user can perform one or more of the following exercises:

- Isotonic deadlift,
- Variable resistance deadlift,
- Isokinetic deadlift (concentric only),
- Isokinetic deadlift (concentric and eccentric),
- Isometric deadlift,
- Isotonic squat,
- Variable resistance squat,
- Isokinetic squat (concentric only),
- Isokinetic squat (concentric and eccentric),
- Isometric squat,
- Isotonic bench press,

○ Variable resistance bench press,
○ Isokinetic bench press (concentric only),
○ Isokinetic bench press (concentric and eccentric),
○ Isometric bench press,
○ Isotonic horizontal push-pull,
○ Isokinetic horizontal push-pull (concentric only),
○ Isokinetic horizontal push-pull (concentric and eccentric),
○ Fixed trajectory exercise,
○ Arbitrary trajectory exercise,
○ Ballistic exercise,
○ Kick exercise, and;
○ Bench pull exercise,

wherein the load regulation assembly comprising at least two motors, the controller operatively coupled to each motor, wherein the controller is configured to control each of the motors based on a user selected exercise to move the load regulation assembly to allow the use to perform the selected exercise,

the system further comprising a plurality of optical sensors disposed on the rack, each optical sensor arranged in communication with the controller, each of the optical sensors oriented to sense a motion or position of a user or sense a motion of the weight supported to the load regulation assembly, and; the controller is configured to detect an unsafe condition and trigger the motors to stop if an unsafe condition is detected,

the system comprising one or more sensors located on or embedded within the load regulation assembly and configured to measure training data generated by the user while performing an exercise, the one or more sensors arranged in communication with the controller, and; the controller configured to determine one or more athletic performance parameters based on the measured training data from the one or more sensors,

the system further comprising one or more cameras positioned on the rack, each camera arranged in communication with the controller, each camera configured to capture one or more images or a video of a user's body while performing the selected exercise,

wherein the controller configured to receive the one or more images or the video, determine one or more angles between a user's body parts while performing the selected exercise and controlling the load regulation assembly to regulate the applied load based on the determined angles;

a mobile device,

wherein the controller configured to communicate with the mobile device,

the mobile device comprising a user interface that is adapted to allow a user to select one or more exercises and set one or more training parameters,

the mobile device further configured to transmit the selected exercise and set training parameters to the controller, and;

wherein the mobile device is configured to receive athletic performance parameters and training data from the controller and present the athletic performance parameter and/or training data on the user interface, and;

the system comprising a platform, wherein the rack is positioned on the platform and the platform provides a surface for the user to stand upon and perform an exercise,

the platform comprising one or more embedded sensors to measure the plantar force exerted by a user, and;

the controller is configured to determine the plantar force in three dimensions exerted by the user based on measurements from the one or more embedded sensors in the platform.

In one example, the strength and conditioning training system provides a multi-layer safety system i.e., a multi-layer safety framework. The strength and conditioning system comprises a software protection layer, a power cutoff protection layer and a physical barrier. Each layer addresses various potential risks to a user while using the strength and conditioning system, and each layer may deactivate a certain part of the system to protect the user.

The term "weight" as used herein means a device or object that is grasped by the user while performing an exercise. The weight may be for example a barbell, dumbbell, kettlebell, or another object that is used for training purposes.

The term "load" or "applied load" refers to the resistance or heaviness a user feels when performing an exercise.

The term "comprising" (and its grammatical variations) as used herein are used in the inclusive sense of "having" or "including" and not in the sense of "consisting only of".

It is to be understood that, if any prior art information is referred to herein, such reference does not constitute an admission that the information forms a part of the common general knowledge in the art in any country.

## BRIEF DESCRIPTION OF THE DRAWINGS

Embodiments of the present invention will now be described, by way of example, with reference to the accompanying drawings in which:

Figure 1 illustrates an example embodiment of a system for providing strength and conditioning training.

Figure 2 illustrates an example of an exercise apparatus that is used as part of the system of Figure 1.

Figure 3 illustrates a front view of the exercise apparatus of Figure 2 with the positions of four cameras.

Figure 4 illustrates a side view of the exercise apparatus with the positions of four cameras.

Figure 5 illustrates a schematic architecture diagram of the controller, its inputs and its outputs.

Figure 6 illustrates a schematic diagram of the controller of the system of Figure 1, and its components.

Figure 7 illustrates a handle attachment that can be installed into the exercise apparatus instead of a weight such as a barbell.

Figure 8 illustrates a user interface of the mobile device presenting exercise selection and exercise parameters for the selected exercise.

Figure 9 illustrates an example interface of the mobile device presenting a real time display of the training data.

Figure 10 illustrates a mathematical model that is used to control the screw modules and motors of the load regulation assembly.

Figure 11 illustrates an example mathematical model of the hybrid force-position control algorithm when used for the control of fixed trajectory or arbitrary trajectory.

Figure 12 illustrates an example steps of the hybrid force-position control algorithm.

Figure 13 illustrates a user interface of the tablet presenting a video analysis screen of a user performing a deadlift.

Figure 14 illustrates a user interface of the tablet presenting a video analysis screen of a user performing a bench press.

Figure 15 illustrates an example of a training load adaptation method.

Figure 16 illustrates an example safety framework applied by the strength training system.

## DETAILED DESCRIPTION OF EXAMPLE EMBODIMENTS

Current training tools, barbells for example largely rely on gravity of loads applied on both sides of the bar to provide the resistance required by users or athletes. Exercise machines also include a weight stack or plates that rely on gravity providing resistance to users or athletes. This gravity-based resistance makes it difficult to carry out isokinetic exercise (concentric and eccentric) or variable resistance exercise, which requires continuous variation of load in rapid speed.

Other existing exercise machines, such as for example the Smith machine, often cannot achieve or provide isokinetic exercise, and also cannot generally provide isometric exercise. These machines also find it difficult to gather data about a person doing exercise and these machines also do not to provide adequate safety protection for athletes during their extreme training exercises. This can increase the risk of injury.

Isokinetic dynamometers currently available (such as Biodex) can perform isotonic exercise, isokinetic exercise and isometric exercise, but only used for standardized testing and training of the upper limbs, lower limbs, and trunk joints of the human body, and doesn't support complex multi-joint training in strength and conditioning training.

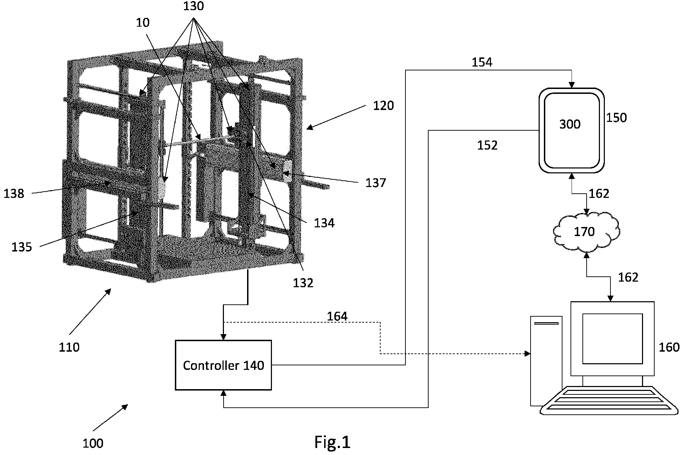

Referring to Figure 1, an embodiment of the present invention is illustrated. This embodiment is arranged to provide a system 100 for strength and conditioning training comprising: an exercise rack 120, a load regulation assembly 130 mounted on the rack, the load regulation assembly 130 is moveable relative to the rack, and; wherein the load regulation assembly 130 is configured to receive and support a weight 10, and; wherein the load regulation assembly 130 is configured to adjust the magnitude and/or direction of an applied load. In one example, the weight may be a barbell, or one or more kettlebells, or one or more dumbbells, or one or more weight plates. In the illustrated examples, the weight is a barbell that is supported by the load regulation assembly 130.

The exercise rack 120 and the load regulation assembly 130 (and all its components) together may form an exercise apparatus 110. The exercise apparatus 110 is adapted to allow a user to perform multiple types of exercise. For example, the exercise apparatus 110 is configured to control the applied load based on a selected exercise type. In one example, the exercise apparatus 110 is configured to adjust the applied load such that a user can perform two or more exercise types, wherein the two or more exercise types are selectable from: isokinetic exercise, isometric exercise and isotonic exercise.

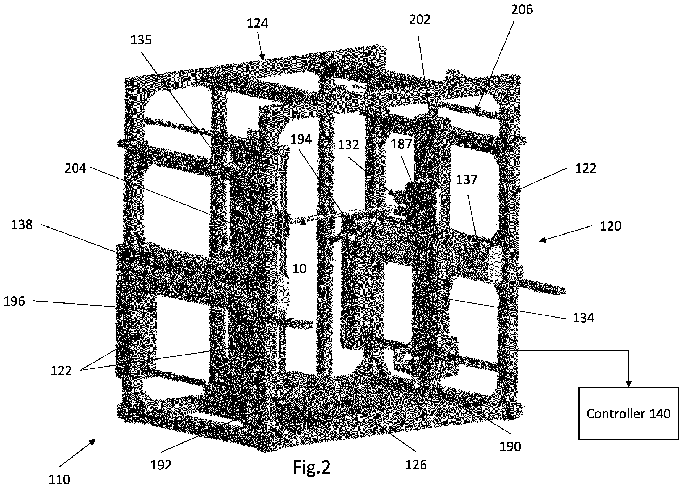

The load regulation assembly 130 may comprise a weight receptacle 132. The weight receptacle 132 may include two recesses being spaced apart from each other. The weight receptacle 132 is configured to receive and retain a weight 10. As shown in Figure 1 and Figure 2, the weight receptacle is configured to retain the barbell. The receptacle 132 may function as a carriage and may be configured to move the barbell vertically.

The system 100 comprises a controller 140 operatively coupled to the load regulation assembly 130. The controller 140 may be operatively coupled to the load regulation assembly 130 (and components of the load regulation assembly) by a wired arrangement or by a wireless arrangement. More specifically, the controller 140 is configured to control four motors of the load regulation assembly 130 by controlling four servos. Each servo may be associated with a motor.

The system 100 may comprise a platform 126. The platform 126 may be a flat surface upon which a user can stand. The exercise rack 120 may be positioned on the platform 126. The platform 126 provides a surface for the user to stand upon and perform an exercise. The platform may be a wooden platform 126 or may be made of nylon or rubber or other suitable material. The platform 126 may be a force platform that is configured to measure plantar force of the user.

Optionally, the system may include two force platforms or the platform 126 may comprise two parts. The force platforms may be configured to measure the force from the left and right feet of the user.

Optionally, in one example the force platform 126 may be a 3D force platform that may be configured to measure the force exerted by the user in three dimensions. In one example, the force platform may be configured to measure the force exerted by the left and right foot of the user in three dimensions.

In one example one or more sensors are located on or within the platform and configured to measure plantar force generated by the user while performing an exercise.

In one example the one or more sensors may be mounted within the platform 126 or mounted on the platform 126. In another example, at least one sensor may be located on an upper surface i.e., a working surface of the platform and at least one sensor may be embedded within the platform. The upper surface or working surface is the surface of the platform that a user interacts with e.g., stands on, sits on, kneels on, lies on or any other interaction.

As shown in the illustrated form, the system 100 comprises four sensors 180, 182, 184, 186. The sensors 180-186 may be embedded in the load regulation assembly 130. In one example, the one or more sensors 180-186 may be force sensors, such as for example load cells or strain gauges. For example, the sensors 180-186 may be load cells or strain gauges. The force sensors 180-186 may be mounted in the weight receptacle 132 and configured to measure the force of interaction between the user and the weight. Alternatively, the force sensors may be directly coupled to the weight 10.

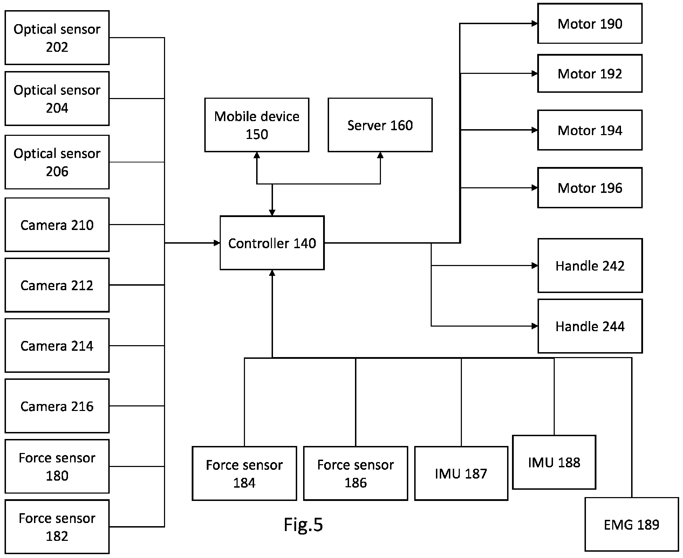

Each of the sensors 180-186 located on or in the load regulation assembly 130 are arranged in communication with the controller 140, as shown in Figure 5. The sensors 180-186 may be connected to the controller 140 by a wired connection. Alternatively, the sensors 180-186 may be configured to communicate wirelessly with the controller 140. The sensors may measure one or more training parameters (or performance parameters) as the user is performing an exercise. For example, the sensors may be configured to measure a force exerted by the user on the weight while performing an exercise. The controller 140 may be configured to determine one or more athletic performance parameters based on the measured training data (i.e., performance parameters) from the one or more sensors.

The system 100 further comprises a mobile device 150. The mobile device 150 may be a tablet or a smartphone or other device. The mobile device 150 includes a processor, a memory unit, and a communication module to allow wireless communication using an appropriate protocol. The mobile device 150 and the controller 140 may be arranged in wireless communication with each other e.g., via Bluetooth or Wi-Fi. Alternatively, the mobile device 150 may be connected to the controller 140 by a wired connection.

The mobile device 150 is coupled to the controller and configured to receive data 154 from the controller 140 and transmit commands or information 152 to the controller 140. For example, the controller 140 may be configured to transmit measured parameters or athletic performance or captured video and/or images of the user to the mobile device 150. The mobile device 150 may be configured to display the received data e.g., the measured parameters (i.e., training data) or athletic performance. The mobile device 150 may also be configured to calculate athletic performance from the received parameters and/or the video or images. The mobile device 150 may be configured to receive an exercise selection or an exercise program selection from the user. The exercise or exercise program selection may also include one or more training parameters (i.e., training targets or training goals). The selected exercise or exercise program is transmitted to the controller 140. The controller 140 is configured to implement the selected exercise or exercise program by controlling the load regulation assembly 130.

The exercise system 100 may comprise an exercise server 160. The exercise server 160 may be an optional component. The exercise server 160 may be remote to the mobile device 150. The exercise server 160 may be remote to the exercise apparatus 110. The exercise server 160 is configured for two-way communication with the mobile device 150 via a communication network 170 e.g., a cellular network or the internet. Communication between the server 160 and the mobile device 150 may be via an appropriate communication protocol such as for example, 3G, 4G or 5G. The two-way communication via the network 170 is denoted by arrows 162 illustrating information flow. The mobile device 150 may be configured to transmit athletic performance or measured performance parameters (i.e., training data) or selected exercise (or exercise program) or video and/or images to the server 160. The server 160 may be configured to determine athletic performance of the user. The calculated athletic performance may be transmitted from the server 160 back to the mobile device 150 for presenting to a user or a trainer or other professional.

Optionally, the server 160 may be adapted for two-way communication with the controller 140 as shown by arrow 164 which denotes information flow between the server 160 and the controller 140. The controller may be configured to transmit measured sensor data from the force sensors and/or from the sensor (or sensors) embedded in the force platform 126. Connection 164 is optional as denoted by the dashed lines.

The server 160 may be implemented by any suitable computing architecture, including portable computers, tablet computers, stand-alone Personal Computers (PCs), smart devices, Internet of Things (IOT) devices, edge computing devices, client/server architecture, "dumb" terminal/mainframe architecture, cloud-computing based architecture, or any other appropriate architecture.

The controller 140 is configured to control the load regulation assembly 130 to adjust the magnitude and/or direction of the applied load based on a selected exercise type by a user (i.e., an athlete).

The load regulation assembly 130 is configured to adjust the applied load such that a user can perform two or more exercise types, wherein the two or more exercise types are selectable from: isokinetic exercise, isometric exercise and isotonic exercise. In one example the load regulation assembly 130 is configured to adjust the applied load such that the user can perform one or more of isokinetic (concentric only) or isokinetic (concentric and eccentric) exercises.

In one example, the load regulation assembly 130 is configured for two translational degrees of freedom such the load regulation assembly is configured to move the weight supported by the load regulation assembly in two translational degrees of freedom and three passive rotational degrees of freedom.

In one example, the load regulation assembly 130 is configured to adjust the applied load such that a user can perform one of twenty-three exercises. The load regulation assembly is configured to move the weight and regulate the applied load based on an exercise selection by the user or a user's trainer or other authorized person. The user can make an exercise or training program selection via the mobile device 150. The selected program is transmitted to the controller 140, which in turn controls movement of the load regulation assembly 130 to allow a user to perform the selected exercise or exercise program.

In one example, the load regulation assembly 130 is configured to allow a user to perform any one or more of the following exercises: isotonic deadlift, variable resistance deadlift, isokinetic deadlift (concentric only), isokinetic deadlift (concentric and eccentric), Isometric deadlift, isotonic squat, variable resistance squat, isokinetic squat (concentric only), isokinetic squat (concentric and eccentric), isometric squat, isotonic bench press, variable resistance bench press, isokinetic bench press (concentric only), isokinetic bench press (concentric and eccentric), isometric bench press, isotonic horizontal push-pull, isokinetic horizontal push-pull (concentric only), isokinetic horizontal push-pull (concentric and eccentric), fixed trajectory exercise, arbitrary trajectory exercise, ballistic exercise, kick exercise, and bench pull exercise.

Figure 2 illustrates an example of the exercise apparatus 110 that is used as part of the exercise system 100. The exercise apparatus comprises the rack 120 and load regulation assembly 130 and optionally controller 140. The exercise apparatus 110 may function as an automated robot to assist a user to perform strength and conditioning training. The system 100 comprises a robotic apparatus 110 (exercise apparatus 110) that is configured to assist a user in performing a number of exercises. The exercise apparatus 110 (robotic apparatus) is configured to provide automated assistance by varying the magnitude and direction of an applied load (i.e., applied resistance) thereby allowing a user to perform a number of different exercises.

Referring to Figure 2, the exercise rack 120 comprises a plurality of vertical columns 122 and at least one horizontal column 124. The horizontal column 124 connects across the vertical columns 122 of the rack.

The load regulation assembly 130 may comprise two vertical supports or posts 134, 135. The weight receptacle 132 is connected to the vertical supports and moveable vertically along the supports 134, 135. The receptacle 132 can function as a carriage and move vertically relative to the vertical posts 134, 135. For example, as the user lifts the barbell 10, the receptacle 132 moves vertically along the posts 134, 135.

The load regulation assembly 130 may comprise two horizontal guide rails 137, 138. The guide rails 137, 138 may be parallel to each other. The guide rails 137, 138 may be fixed to the rack. The guide rails 137, 138 are not capable of moving relative to the rack 120.

The vertical supports or posts 134, 135 may also be guide rails to guide the vertical motion of the receptacle 132. In the illustrated form of Figure 1 and Figure 2, the load regulation assembly 130 may comprise four guide rails, two vertical 134, 135 and two horizontal 137, 138. The receptacle i.e., carriage 132 may be moveable vertically along the vertical guides i.e., vertical posts 134, 135.

In use, the vertical posts 134, 135 are moveable along the horizontal guide rails 137, 138. The vertical posts 134, 135 can move together along the horizontal guide rails 137, 138 as the user moves the barbell 10 horizontally. The vertical supports or posts 134, 135 may be configured to slide horizontally along the guide rails 137, 138.

The assembly 130 is configured to move relative to the rack 120 in two dimensions. The carriage 132 supporting the weight can also be moved vertically and horizontally relative to the rack.

The load regulation assembly 130 comprises at least two motors. In the illustrated example, the load regulation assembly comprises four motors 190, 192, 194 and 196. Motor 196 is hidden in Figure 2 but is attached to horizontal guide rail 138. Two motors are used to control horizontal motion and two motors are used to control vertical motion. The controller 140 operatively coupled to each motor 190-196 as shown in Figure 5. A motor is coupled to the bottom of each vertical support or post 134, 135. Motor 190 is coupled to the vertical post 134. Motor 192 is coupled to the vertical post 135. Motor 194 is coupled to the rail 137 and motor 196 may be coupled to the rail 138. The two motors 190, 192 coupled to the vertical guides i.e., vertical posts 134, 135 are configured to control vertical movement of the carriage 132. The motors 194, 196 coupled to the horizontal rails 137, 138 are configured to control horizontal movement. The motors 190-196 may be configured to control the speed the assembly 130 moves in the vertical and horizontal directions, thereby controlling the vertical and horizontal movement of the weight.

The motors 190-196 may also control vertical and horizontal movement of the carriage 132. The motors 190, 192 may control vertical movement of the carriage (and assembly 130) to vary the applied load to the user by controlling the magnitude and direction of the vertical motion.

The controller 140 is configured to control the motors. In one example, the controller 140 may include four servos, wherein each motor is controlled by a servo. The vertical motors, 190 and 192 are configured to adjust the applied load of the barbell. The greater the force from the motors 190, 192 the greater the applied load.

The horizontal motors 194, 196 are configured to control the horizontal movement of the vertical supports or posts 134, 135 along the horizontal rails 137, 138. The greater the force from the motors 194, 196 the higher the horizontal resistance. In one example the motors 190-196 can be controlled to adjust the vertical and horizontal applied load.

Each vertical support 134, 135 may comprise one or more ball screws. In one example each support may comprise a ball screw. The ball screws may be vertically oriented. Each ball screw may be coupled to a motor and are used to generate applied loads of different magnitudes and directions. The ball screws may be configured to translate rotational motion of the motor to control movement of the vertical supports and thereby move the weight to generate loads of different magnitudes and force directions.

In one optional configuration each horizontal guide rail may comprise horizontal ball screws that may be adapted to generate loads of different magnitudes.

The controller 140 is configured to control each of the motors 190-196 based on a user selected exercise to move the load regulation assembly 130 to allow the use to perform the selected exercise. The load regulation assembly 130 is controlled by the motors to move the weight 10 to adjust the magnitude and direction of the applied load in accordance with the selected exercise. For example, for isokinetic exercise the force i.e., applied load is controlled based on the user's athletic performance. The motors 190-196 may be controlled to adjust the direction and magnitude of the applied load based on the athletic performance to achieve an isokinetic exercise. Similar control of applied load can be achieved for the twenty-three other exercises that are possible.

The system 100 further comprises a plurality of optical sensors disposed on the rack 120. The sensors may be part of the exercise apparatus 110. Referring to Figure 2 the system 100 comprises at three optical sensors 202, 204, 206. Two optical sensors 202, 204 may be mounted adjacent or on the vertical supports 134, 135. One optical sensor 206 may be mounted on or adjacent a horizontal guide rail 137, 138. As shown in Figure 2, the optical sensor 206 is mounted on a horizontal rail 124. Each optical sensor may be an elongate optical sensor.

Two optical sensors 202, 204 are used to monitor the vertical movement of the barbell 10. The optical sensors 202, 204 are configured to sense the vertical movement of the barbell as the user moves the barbell 10 and receptacle 132.

In another example, the system 100 may comprise four or more optical sensors mounted on the rack and configured to sense motion or position of the user.

Optical sensors 202, 204 may be configured to monitor the vertical movement or motion of the weight 10. Optical sensor 206 may be configured to monitor the horizontal motion of the weight 10 (e.g., barbell).

Each optical sensor 202, 204, 206 arranged in communication with the controller 140. Each of the optical sensors 202, 204, 206 are oriented to sense a motion or position of a user or sense a motion of the weight supported to the load regulation assembly 130. The optical sensors 202, 204, 206 define safety light curtains that are used to protect athletes during training.

In one example optical sensors may be installed on the rack 120 in both the front-back and up-down movement directions can trigger an emergency stop at any designated position, thus providing protection for the athletes in case of unexpected situations. The controller 140 is configured to detect an unsafe condition and trigger the any one or more of the motors 190-196 to stop if an unsafe condition is detected by the optical sensors.

In one example, the optical sensors 202, 204, 206 may be infrared sensors. Alternatively, the system may comprise one or more acoustic sensors e.g., ultrasonic sensors that are mounted on the rack and arranged in communication with the controller 140. The controller may be configured to determine an unsafe position and stop the motors to prevent injury to the user. The optical sensors 202, 204, 206 are advantageous because they provide protection for the athletes in case of unexpected situations.

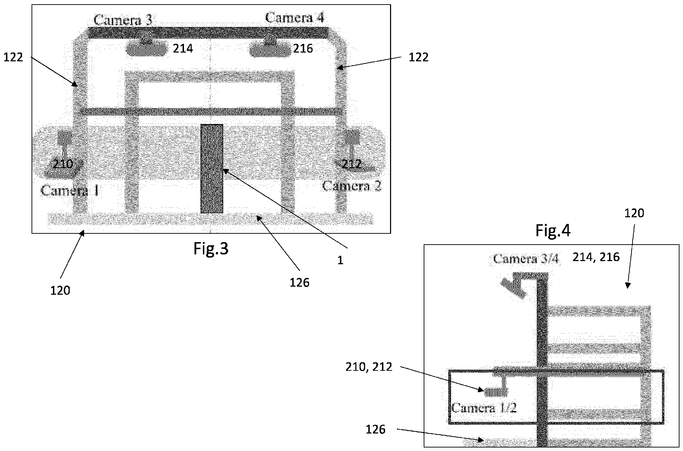

Figure 3 and Figure 4 illustrate front and side views of the exercise apparatus 110, respectively. The system 100 further comprises one or more cameras positioned on the rack 120. The cameras may form part of the exercise apparatus 110.

Referring to Figure 3 and Figure 4, the system may comprise four cameras 210, 212, 214, 216. The four cameras 210-216 may each be mounted on the rack 120. The cameras 210-216 are configured to capture angles of a user's (e.g., an athlete's) body e.g., the angle at the elbow joints or knee joint angle. The user 1 is represented as a rectangle 1.

As shown in Figure 3, In one example each camera 210 - 216 is arranged in communication with the controller 140. Each camera is configured to capture one or more images or a video of a user's body while performing the selected exercise. The controller 140 is configured to receive the one or more images or the video, determine one or more angles between a user's body parts while performing the selected exercise and controlling the load regulation assembly to regulate the applied load based on the determined angles.

As shown in Figure 3 and Figure 4 two cameras 214, 216 are located along an upper portion or an upper rail of the exercise rack 120. Two cameras 210, 212 are located along a lower portion or lower rail of the exercise rack 120. One camera may be positioned directly above and vertically aligned with another camera, as shown in Figure 4. The cameras may be arranged as camera pairs i.e.; one lower camera and one upper camera may define a camera pair.

The cameras 210-216 may be configured to capture a video of a user e.g., an athlete performing an exercise. Alternatively, the cameras 210-216 may be configured to capture a plurality of still images. The captured video from the cameras 210-216 may be transmitted to the controller 140 and/or the mobile device 150. In a further example, the video stream from the cameras 210-216 may be transmitted to the server 160.

The recorded video from the cameras 210-216 may be used by the controller for adjustment of the load regulation assembly 130. The controller 140 (or mobile device) may receive the video stream and calculate body angle of the user while the user is performing exercises. The controller 140 or mobile device 150 may include a real time filter design for camera data processing. Specifically, the controller 140 or mobile device 150 may be configured to include vision-based body posture online measurement and tracking, athlete kinematics, dynamics and power online/offline measurement. The controller 140 may be configured Optionally, these functions may be implemented by the server 160. The controller 140 may be configured to utilize multiple types of sensor data and the camera images or video to determine athletic performance of the user.

The mobile device 150 is configured to receive athletic performance parameters and training data from the controller 140 and present the athletic performance parameter and/or training data on the user interface.

In one example, the exercise analysis server 160 is configured to determine athletic performance parameters based on the received training data and/or based on the received one or images or video of the user performing an exercise.

Figure 5 illustrates an example electronic architecture of the components of the system 100. The controller 140 is operatively coupled to a number of other components. The controller 140 is configured to receive input data from the sensors e.g., force sensors 180-186 as the user performs an exercise. The controller 140 is further configured to receive recorded video or images of the user performing an exercise from the cameras 210-216. The controller 140 further receives inputs from the optical sensors 202, 204, 206. The controller 140 is configured to process the video or images and determine angles between various body parts e.g., angle between elbows during bench press. The controller 140 is configured to provide control outputs to one or more components.

Optionally, the system 100 may comprise additional sensors that can be used with the force sensors 180-186. The additional sensors may also capture training data. For example, the system may comprise two IMUs 187, 188 mounted on the user or on the weight. The system 100 may also comprise an EMG sensor 189 mounted on the user. The IMUs 187, 188 and EMG sensor 189 may communicate measured training data to the controller 140. For example, acceleration of the user or weight (e.g., barbell) from the IMU and activation of the user's muscles from the EMG can be transmitted to the controller 140. As shown in Figure 5, the IMUs 187, 188 and EMG 189 are inputs to the controller 140.

Preferably the system comprises two IMUs 187, 188. One IMU may be mounted in a receptacle. In one example, the IMUs may be mounted on the carriage 132, adjacent the barbell.

Referring to Figure 5, the controller 140 is configured to output control signals to the motors 190-196 to adjust the applied load. The control output may be based on the selected exercise and based on one or more of the training data from the sensors 180-186 and/or the analysis of the video of a user. The control output adjusts the motors to adjust the magnitude and direction of the applied load. The controller 140 may also stop the motors or provide an evasive control output based on if the optical sensors 202, 204, 206 detect an unsafe position. The controller 140 may further output information and receive inputs from the mobile device 150. Optionally, the controller 140 may also receive data and transmit data to the server 160.

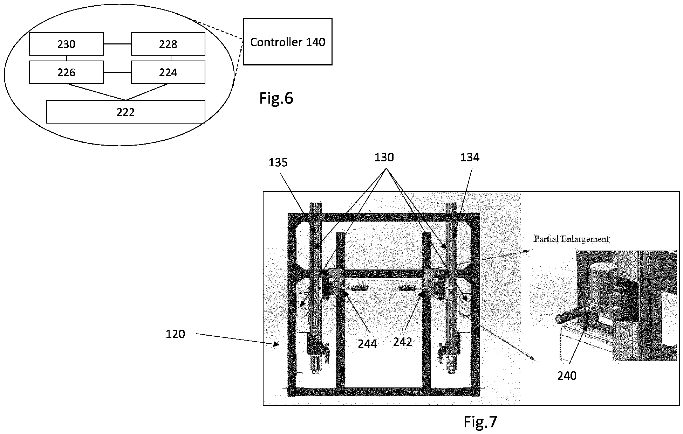

Figure 6 illustrates a block diagram of the controller 140 and its components. The controller may be a microprocessor or a microcontroller. Alternatively, the controller 140 may be a computer and may be implemented by any suitable computing architecture, including portable computers, tablet computers, stand-alone Personal Computers (PCs), smart devices, Internet of Things (IOT) devices, edge computing devices, client/server architecture, "dumb" terminal/mainframe architecture, cloud-computing based architecture, or any other appropriate architecture. The controller 140 may be appropriately programmed to implement the invention.

The controller 140 includes suitable components necessary to receive, store and execute appropriate computer instructions. The components may include a processing unit 222, including Central Processing Unit (CPU), Math Co-Processing Unit (Math Processor), Graphic Processing Unit (GPUs) or Tensor Processing Unit (TPUs) for tensor or multi-dimensional array calculations or manipulation operations, read-only memory (ROM) 224, random access memory (RAM) 226, and input/output devices 228 and storage devices such as disk drives. Optionally, the controller 140 may include one or more input devices 228 such as an Ethernet port, a USB port, etc.

Optionally, the controller may include a display to present information e.g., present training data or present a determined athletic performance of a user. The display (not shown) may be for example, a liquid crystal display, a light emitting display or any other suitable display. The controller 140 comprises a communication module 230 to allow the controller 140 to connect to one or more computing devices such as a server 160, mobile device 150, personal computers, terminals, wireless or handheld computing devices, Internet of Things (IoT) devices, smart devices, edge computing devices. The communication module 230 may be connected to an external computing network through a telephone line or other type of communications link.

The controller 140 may include instructions that may be included in ROM 224, RAM 226 or disk drives and may be executed by the processing unit 222. The mobile device 150 and server 160 may also include similar components as described above.

The controller 140 (and/or the mobile device 150, and/or the server 160) may also provide the necessary computational capabilities to operate or to interface with a machine learning network, such as a neural networks, to provide various functions and outputs. The neural network may be implemented locally, or it may also be accessible or partially accessible via a server or cloud-based service. The machine learning network may also be untrained, partially trained or fully trained, and/or may also be retrained, adapted or updated over time. The controller 140 may comprise one or more GPUs being operatively coupled to the CPU (i.e., processor). The controller 140 may comprise additional hardware elements operatively coupled to the CPU and/or the GPU to provide the controller components needed to implement a machine learning network or machine learning model. The learning network or model may be stored in a memory unit e.g., ROM. The machine learning network may be trained to process measured training data and calculate athletic performance of the user based on the measured training data. A machine learning network, on the controller 140 may also be trained to process video received from the cameras 210-216 to determine the angle between joints or assess performance of an exercise by the user.

The hardware of the exercise system 100 (i.e., system for strength and conditioning training 100) mainly includes: a rack, motors, and ball screws, accessories (such as barbell, foot pedals and other functional training tools), safety light curtains (i.e., optical sensors), force sensors, multi-cameras, and handheld tablet, as described earlier. Various sensors on the robotic system are used to collect real-time training data from the athletes and robot for data analysis and evaluation, thus guiding the training of the athletes.

Horizontally and vertically mounted motors and ball screws are used to generate loads of different magnitudes and force directions to the barbell (i.e., the weight in the load regulation apparatus).

In one example the load regulation assembly 130 provides the barbell with two active translational degrees of freedom driven by the motors, used for horizontal and vertical movement, as well as three passive rotational degrees of freedom.

The safety light curtains (i.e., optical sensors 202, 204, 206) installed on the exercise apparatus 110 in both the front-back and up-down movement directions can trigger an emergency stop at any designated position, thus providing protection for the athletes in case of unexpected situations. In some examples, the optical sensors 202 and 204 may be mounted on the vertical supports 134 and 135 (up-down), while sensor 206 is mounted on the rack 120 (front-back).

The four cameras 210-216 installed on the robotic system capture the angles of athletes' body, such as elbow joints, and adjust the weight of barbell during the training process based on the angles. This angle data may be calculated by the controller 140, or mobile device 150 or at the server 160 or in all three locations.

The force sensors 180-186 in the load regulating assembly 130 and/or the force sensors embedded in the force platform 126 can be used to obtain the training data for athletes (e.g., squat), thereby evaluating their athletic performance. The handheld tablet (i.e., mobile device 150) can be used not only for selecting training programs and setting training parameters, but also for displaying training data and performing evaluations in real time.

Additionally, a handle mechanism 240 may be used, as shown in Figure 7. As shown in Figure 7, a handle mechanism can be installed in the load regulation assembly. The handle mechanism is removably couplable to the load regulation assembly 130. Referring to Figure 7, the handle mechanism 240 comprises two handles 242, 244. A first handle 242 is removably couplable to a first vertical support 134 of the load regulation assembly 130. The second handle 244 is removably couplable to a second vertical support 135 of the load regulation assembly.

The handle mechanism 240 is driven by a motor, enabling rotational movement around the axis of the motor at the handle, as shown in Figure 7. Each handle may be independently controllable. Through the control of motors on the horizontal and vertical ball screws, as well as on the handle mechanism itself, athletes (i.e., users) holding the handles on both sides can perform complex movements (such as swimming exercises, etc.).

The system 100 may further comprises a one or more foot pedals that may be removably attachable to the rack 120 or the load regulation assembly 130. By replacing the barbell with foot pedals, it can be used for athletes to carry out kick exercise.

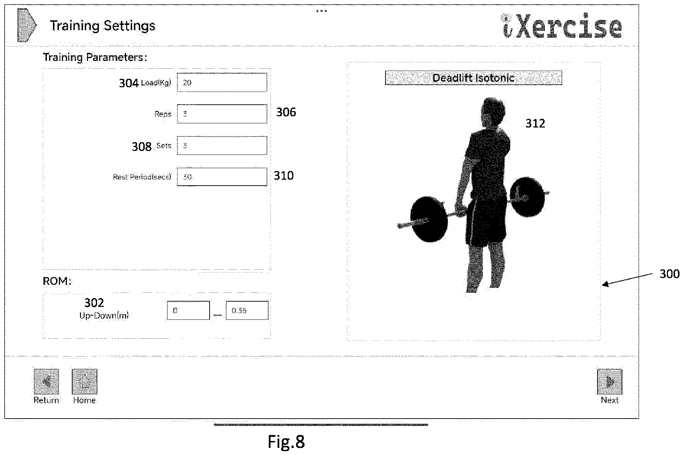

Figure 8 illustrates a user interface 300 of the mobile device 150. The training parameters i.e., exercise to be performed and associated settings can be set via the mobile device 150 (handheld tablet). Referring to Figure 8, an isotonic deadlift is the selected exercise, as displayed. An ROM (range of motion) 302 is defined. The range of motion provides information to control the motors. The motors 190-196 are controlled to move the load regulation assembly 130 such that the user achieves the defined range of motion. The other parameters for the deadlift exercise are weight 304, reps 306, sets 308 and rest time 310. An optional coaching video 312 may be presented to teach the user correct technique.

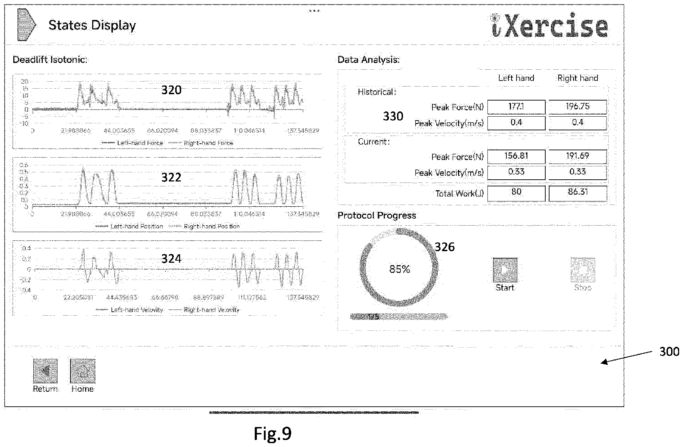

Figure 9 illustrates a real time display of the training data. The real time training data may be displayed on the user interface 300 of the mobile device 150. Alternatively, the real time training data may be presented on a display of the controller 140. The real-time display of the training data and the results of the evaluation metrics are shown in Figure 9. A real time plot of force exertion in each hand 320 is presented. Additionally, a real time plot of each hand position 322 is presented and a real time plot of each hand velocity 324 is presented. The force may be measured by the force sensors 180-186 or by force sensors embedded in the load regulation assembly 130. The hand position and hand velocity may be determined by processing the video stream from the cameras or based on a combination of processing the video from the cameras 210-216 and data from the motor servos.

Referring to Figure 9, a progress indicator 326 may be displayed representing progress through the protocol by the user. Optionally an aggregate display 330 of the historic measurements can be presented on the mobile device 150 or on a display of the controller 140.

The system 100 mainly includes a dynamics and control algorithm to control operation of the load regulation assembly 130, a hybrid force-position control algorithm to control operation of the load regulation assembly 130 and multi-sensor-based real-time feedback to assist a user in performing strength and conditioning exercises.

The dynamics control technology used to control the motion of the load regulation assembly 130 mainly includes compensation of gravity, static friction, dynamic friction and inertia force. The controller 140 may implement a force control algorithm. The force control algorithm is developed to achieve programmable load weights in isotonic exercise and variable resistance exercise without the need for manual barbell adjustment. Force control is also used to achieve isokinetic exercise (concentric and eccentric), where the force depends entirely on the athlete's actual performance, which can achieve more effective training results and help with the athlete's post-injury recovery.

The controller 140 further utilises a position control algorithm. The position control algorithm is configured to achieve isometric exercise, which can control the barbell (i.e., weight) to be fixed at any suitable position for the athlete during strength and conditioning training. The force control and position control algorithms are used to control the motors which manipulate the movement of the load regulation assembly 130 which controls the barbell to regulate the applied load magnitude and direction.

The controller 140 may further be programmed to implement a hybrid force-position control algorithm that is developed for the training of fixed trajectory or arbitrary trajectory, such as swimming exercises, ballistic exercise, kick exercise and so on. Specifically, the tangential direction of the trajectory may be force controlled and the normal direction is position controlled.

Feedback from the cameras is used for adjustment of the load regulation assembly 130. The controller 140 (or tablet 150) is configured to use the recorded video to calculate body angle, update a calculation in body angle, and apply a real time filter for camera data processing. The system 100 can be used for function testing and evaluation. The system may be configured to determine posture measurement based on processing the video stream from the cameras 210-216 i.e., the controller 140 and/or tablet 150 and/or server 160 (either one, or two or all three) may implement a vision-based body posture determination process. Additionally, the controller 140 and/or tablet 150 and/or server 160 may determine athlete kinematics, dynamics and power. These calculations may be performed online i.e., live or in real time or may be performed offline on stored data. All training data can be saved in the handheld tablet's database for subsequent viewing or analysis. Optionally, all data may be stored in the controller 140 or may be transmitted and saved at the server 160.

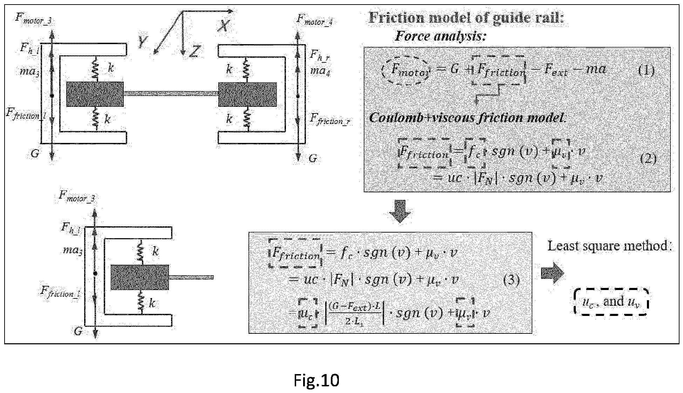

Figure 10 illustrates an example of the control algorithm to control the load regulation assembly 130. In particular, Figure 10 illustrates a mathematical model that is used to control the screw modules and motors of the load regulation assembly 130.

For horizontal screw modules, the load torque of the screw can be expressed as:

$$T_t = (F_t \times P)/2\pi \qquad (1)$$

$T_t$ is the torque generated by overcoming the axial force $F_t$. The lead of the ball screw is P. $F_t$ is the force on the table, including external force, inertial force, and friction. The friction of the table calculation is as follows:

$$F_t = (M_t + M_{load})\frac{dv}{dt} + F_{friction} + F_{ext} \qquad (2)$$

$$F_{friction} = u_v \cdot v + f_c \cdot sgn(v) = u_v \cdot v + u_c \mathrm{sgn}(v)|F_N| \qquad (3)$$

$M_t$ is the mass of the table; $M_{load}$ is the mass of the load on the table. $v$ is the feed speed of the table, and $F_{friction}$ is the friction between the table and the guide rail. $F_{ext}$ is the external force applied to the work table; $F_N$ is the positive pressure loaded on the guide rail; $u_v$ is the viscous friction coefficient. $u_c$ is Coulomb friction coefficient; sgn(v) is a symbolic function, when $v$ is positive, sgn(v) = 1; When $v$ is negative, sgn($v$) = -1; When $v$ = 0, sgn($v$) = 0. $w_{ls}$ is the speed of the ball screw. The relationship between the feed speed of the table and the speed of the ball screw is:

$$v = (P \times w_{ls})/2\pi \qquad (4)$$

The friction between the table and the guide rail is calculated as follows:

$$F_{friction} = u_v \cdot v + f_c \cdot sgn(v) = u_v \cdot v + u_c(M_t + M_{load})sgn(v) \qquad (5)$$

Taking the barbell of the robotic system as an example, the friction compensation model is shown in Figure 10.

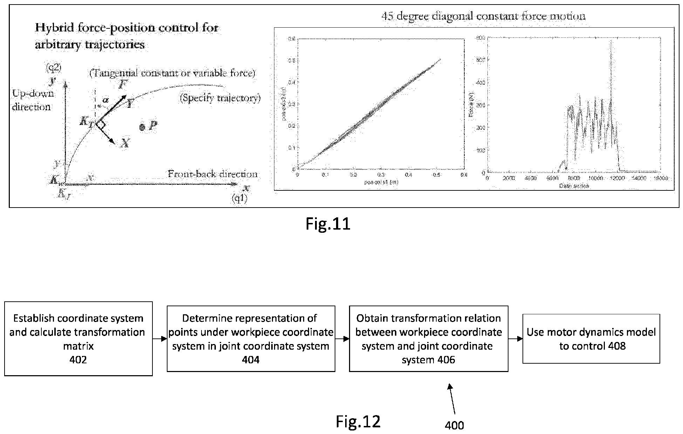

The hybrid force-position control will now be described in relation to Figure 11 and Figure 12. The hybrid force-position control algorithm (or method) is used for the control of fixed trajectory or arbitrary trajectory, as shown in Figure 11. The algorithm is preferably executed by the controller 140. The hybrid force-position control may be executed by the tablet 150.

In one example, the hybrid force-position control algorithm 400 comprises the following steps as shown in Figure 12. Step 402 comprises establishing a world coordinate system, a workpiece coordinate system and joint coordinate system respectively, and defining a transformation matrix from workpiece coordinate system to world coordinate system and from joint coordinate system to world coordinate system. Step 404 comprises determining the representation of points under workpiece coordinate system in joint coordinate system. Step 406 comprises obtaining the transformation relationship between the workpiece coordinate system and the joint coordinate system. Step 408 comprises utilising the motor joint dynamics model to realize force-position control under the workpiece coordinate system. The method 400 may be executed by the controller 140.

The system 100 comprises a plurality of sensors. In addition to the force sensors, the system 100 may comprise two IMUs 187 and an EMG sensor 189 and optionally other sensors that can be used to capture training data to assess performance of the user. The force sensors 180-186 can be used to obtain the force of interaction between the athlete and the weight (e.g., barbell).

Optionally the platform 126 may be force platform configured to measure forces. The force sensors 180-186 are configured to measure the force of interaction between the user and weight, the force platform is used to obtain the plantar force of the athlete, the IMU is used to obtain the acceleration of the athlete's movement, the EMG is used to obtain the amount of activation of the athlete's muscles, and the camera is used to capture the athlete's joint angles and the posture of the movement. The data collected by the sensors in real time is used to feed back to the load regulation assembly 130 to adjust the applied load and motion of the weight (i.e. barbell) for better training results.

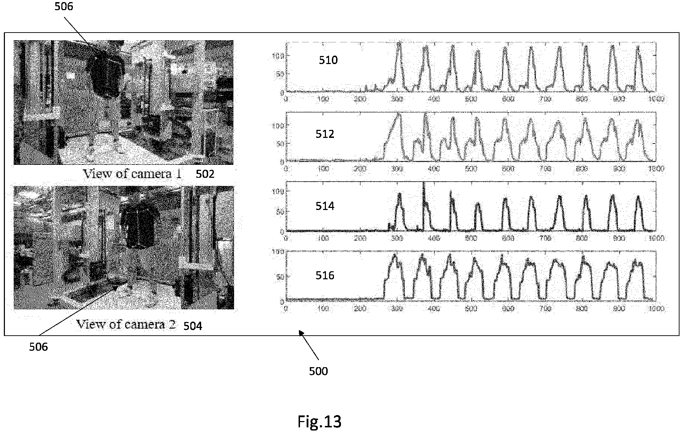

Figure 13 illustrates a user interface of the tablet 150 presenting a video analysis screen 500 of a user performing a deadlift. The video analysis screen 500 illustrates the video captured from multiple cameras. The camera views 502, 504 illustrate different angles of a user performing an exercise. The joint angles are calculated from a wire frame 506 superimposed on the user in each video stream 502, 504. Joint angles are calculated from the analysis of the video by the controller 140. The angles may be calculated from the wire frame 506. The measured angle changes of various angles are shown in plots 510-516. Each plot relates to the changing angle between two limbs i.e., an angle of a joint when performing an exercise. For example, plot 510 may relate to left knee joint angle, 512 relates to right knee joint angle, 514 relates to left hip joint angle and 516 relates to right hip joint angle.

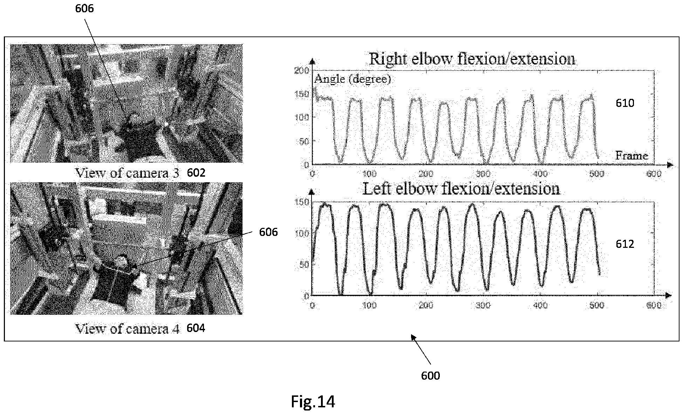

Figure 14 illustrates a user interface of the tablet presenting a video analysis screen 600 of a user performing a bench press. The video analysis screen 600 shows two camera feeds 602, 604 from two different angles. The joint angles may be calculated from a wire frame 606 superimposed on the video. A plot of the right elbow flexion/extension (i.e., right elbow angle) 610 is shown and a plot of the left elbow flexion/extension (i.e., left elbow angle) 612 is presented.

The changes in angle are measured and can be used to determine athletic performance. The changes in the angles can also be used to vary the applied load magnitude and direction depending on the selected exercise. The user's position and joint angles can be used to assess the quality of the exercise being performed by the user providing objective measurements of a user's performance. This allows for further tailoring of the applied load and allows a coach to assess the improvements required.

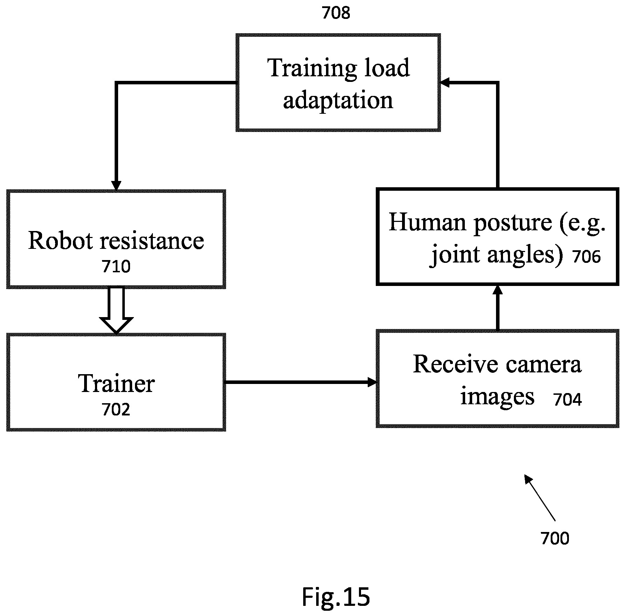

Figure 15 illustrates an example a training load adaptation method 700. The exercise apparatus 110 is configured to adjust the training load based on the user 702 (e.g., trainer's) movement status and one or more performance indicators. The strength and conditioning training system 100 may implement the method 700. The load adaptation method 700 illustrates how the training load is adjusted based on the user's posture to stimulate the user's neuromuscular system over a broader range of motion. Trainer 702 here means a person using the exercise apparatus 110.

During a strength training exercise with constant resistance, the maximum muscle force is typically concentrated around a specific "sticking point". The force can be concentrated where the movement is most challenging. In other ranges of motion, force output may be lower, which can limit muscle stimulation and reduce training effectiveness. By implementing posture-based resistance adjustment as per method 700, the system 100 can dynamically modify the resistance throughout the movement, thereby increasing the effective stimulation zone.

The training load adaptation method 700 comprises step 704. Step 704 comprises receiving images from the cameras 210-216. Step 706 comprises calculating a human posture e.g., joint angles from the images of the trainer 702. The human posture can be used to determine maximum force based on the human posture and movement of the trainer 702. Step 708 comprises step of training load adaptation. At step 708 the system 100 is configured to adjust the resistance based on posture of the patient. At step 708 the controller 140 may be configured to determine an adjustment to the training load. Step 710 comprises adjusting the resistance applied to trainer 702. Step 710 comprises applying the adjusted load to the training robot i.e., to the exercise apparatus 110. The controller 140 may be adapted to adjust the load applied based on the posture of the trainer.

This approach helps maintain high intensity across a broader range of motion. Our robot can also adjust resistance based on other human state information, such as muscle activation levels, joint torques, and similar metrics. This approach can make the system advantageous because the applied load can be varied based on the posture of the trainer 702 to provide improved resistance training.

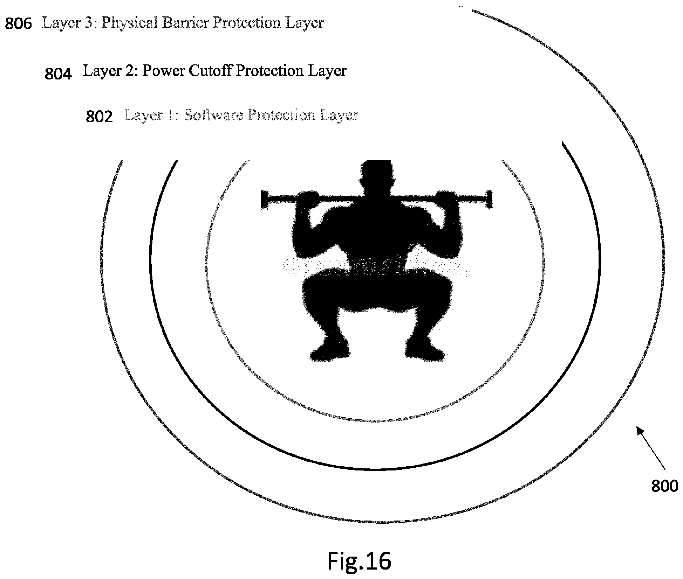

Figure 16 illustrates an example safety framework 800 applied by the strength training system 100. In strength training exercises, athletes often train near their personal limits, making safety measures critically important-this presents a significant challenge in strength training. Our robot integrates a multi-layer, redundant protection system to address this challenge. The safety framework 800 comprises a first layer 802 of software protection. The first layer of protection 802 may be applied by the controller 140. In the first layer of protection 802 the motion of the barbell 10 (such as range of motion, force, velocity, and inclination angles) may be limited by software control e.g., implemented by the controller 140.

The second layer of protection 804 may comprise a power cutoff protection layer. In the second layer of protection 804 the independent light curtains 202, 204, 206 may detect an unsafe situation e.g., dangerous posture or dangerous weight position. The controller 140 may automatically cut power when safety boundaries are breached i.e., the optical sensors detect an unsafe condition. The system 100 may comprise one or more emergency stop buttons for a manual cutoff. The second layer 804 may also comprise an emergency stop for a manual cutoff.

The system 100 may comprise a third layer of protection 806. The third layer of protection 806 may comprise one or more spotting arms that may be positioned at predefined positions. The spotting arms may function as mechanical stops to stop the weight from injuring the trainer 702. The multi-layer protection framework may be implemented by the sensors and controller 140.

The system for strength and conditioning training is advantageous because it is capable of providing isotonic exercise and variable resistance exercise, isokinetic exercise (concentric and eccentric), and isometric exercise. The system is also advantageous because it also integrates the motion measurement from cameras and one or more other sensors offering a comprehensive training solution. Unlike most existing pneumatic-driven and motor-driven exercise machines, the system described herein is based on the motor dynamic motion control technology, hybrid force-position control technology, and real-time feedback from sensors and/or cameras to achieve isotonic exercise, isokinetic exercise and isometric exercises all from the same machine. The system is configured to adjust the motor force according to the athlete's actual performance during isokinetic exercise (concentric and eccentric), which can effectively protect athletes from injury.

It will also be appreciated that where the methods and systems of the present invention are either wholly implemented by computing system or partly implemented by computing systems then any appropriate computing system architecture may be utilised. This will include stand alone computers, network computers and dedicated hardware devices. Where the terms "computing system" and "computing device" are used, these terms are intended to cover any appropriate arrangement of computer hardware capable of implementing the function described.

It will be appreciated by persons skilled in the art that numerous variations and/or modifications may be made to the invention as shown in the specific embodiments without departing from the spirit or scope of the invention as broadly described. The present embodiments are, therefore, to be considered in all respects as illustrative and not restrictive.

Also, it is noted that the embodiments may be described as a process that is depicted as a flowchart, a flow diagram, a structure diagram, or a block diagram. Although a flowchart may describe the operations as a sequential process, many of the operations can be performed in parallel or concurrently. In addition, the order of the operations may be rearranged. A process is terminated when its operations are completed. A process may correspond to a method, a function, a procedure, a subroutine, a subprogram, etc., in a computer program. When a process corresponds to a function, its termination corresponds to a return of the function to the calling function or a main function.

In its various aspects, embodiments of the invention can be embodied in a computer-implemented process, a machine (such as an electronic device, or a general-purpose computer or other device that provides a platform on which computer programs can be executed), processes performed by these machines, or an article of manufacture.

**Claims**

1. A system for strength and conditioning training, comprising:

   an exercise rack,
   a load regulation assembly mounted on the rack,
   the load regulation assembly is moveable relative to the rack, and;
   wherein the load regulation assembly is configured to receive and support a weight, and;
   wherein the load regulation assembly is configured to adjust the magnitude and/or direction of an applied load.

2. The system of claim 1, comprising a controller operatively coupled to the load regulation assembly, wherein the controller is configured to control the load regulation assembly to adjust the magnitude and/or direction of the applied load based on a selected exercise type.

3. The system of claim 2, wherein the load regulation assembly is configured to adjust the applied load such that a user can perform two or more exercise types, wherein the two or more exercise types are selectable from: isokinetic exercise, isometric exercise and isotonic exercise.

4. The system of claim 3, wherein the load regulation assembly is configured to adjust the applied load such that a user can perform one of the following exercises:

   • Isotonic deadlift,
   • Variable resistance deadlift,
   • Isokinetic deadlift, concentric only,
   • Isokinetic deadlift, concentric and eccentric,
   • Isometric deadlift,
   • Isotonic squat,
   • Variable resistance squat,
   • Isokinetic squat, concentric only,
   • Isokinetic squat, concentric and eccentric,
   • Isometric squat,
   • Isotonic bench press,
   • Variable resistance bench press,
   • Isokinetic bench press, concentric only,
   • Isokinetic bench press, concentric and eccentric,
   • Isometric bench press,
   • Isotonic horizontal push-pull,

• Isokinetic horizontal push-pull, concentric only,
• Isokinetic horizontal push-pull, concentric and eccentric,
• Fixed trajectory exercise,
• Arbitrary trajectory exercise,
• Ballistic exercise,
• Kick exercise, and;
• Bench pull exercise.

5. The system of claim 2, wherein the load regulation assembly is configured for two translational degrees of freedom such the load regulation assembly is configured to move the weight supported by the load regulation assembly in two translational degrees of freedom and three passive rotational degrees of freedom.

6. The system of claim 5, wherein the load regulation assembly comprising:

at least two motors,
the controller operatively coupled to each motor,
wherein the controller is configured to control each of the motors based on a user selected exercise to move the load regulation assembly to allow the user to perform the selected exercise.

7. The system of claim 6, comprising:

a plurality of optical sensors disposed on the rack,
each optical sensor arranged in communication with the controller,
each of the optical sensors oriented to sense a motion or position of a user or sense a motion of the weight supported to the load regulation assembly, and;
the controller is configured to detect an unsafe condition and trigger the motors to stop if an unsafe condition is detected.

8. The system of claim 2, comprising:

one or more sensors located on or embedded within the load regulation assembly and configured to measure training data generated by the user while performing an exercise,
the one or more sensors arranged in communication with the controller, and;
the controller configured to determine one or more athletic performance parameters based on the measured training data from the one or more sensors.

9. The system of claim 2, comprising:

one or more cameras positioned on the rack,
each camera arranged in communication with the controller,
each camera configured to capture one or more images or a video of a user's body while performing the selected exercise,
the controller configured to receive the one or more images or the video, determine one or more angles between a user's body parts while performing the selected exercise and controlling the load regulation assembly to regulate the applied load based on the determined angles.

10. The system of claim 1, comprising:

a mobile device,
the controller configured to communicate with the mobile device,
the mobile device comprising a user interface that is adapted to allow a user to select one or more exercises and set one or more training parameters,
the mobile device further configured to transmit the selected exercise and set training parameters to the controller, and;
wherein the mobile device is configured to receive athletic performance parameters and training data from the controller and present the athletic performance parameter and/or training data on the user interface.

11. The system of claim 6, comprising four motors, wherein two motors are adapted to control the vertical movement of the

# EP 4 706 788 A1

load regulation assembly, and two motors are adapted to control the horizontal motion of the load regulation assembly.

12. The system of claim 7, comprising at least two optical sensors that are configured to monitor the vertical movement of the weight, and; the system comprising at least one optical sensor configured to monitor the horizontal movement of the weight.

13. The system of claim 11, wherein the applied load is controlled by the two motors adapted to control the vertical movement of the load regulation assembly, and wherein the greater the force applied the vertical motors the greater the applied load.

14. The system of claim 8, comprising a platform, wherein the rack is positioned on the platform and the platform providing a surface for the user to stand upon and perform an exercise,

the platform comprising one or more embedded sensors to measure the plantar force exerted by a user, and; the controller is configured to determine the plantar force in three dimensions exerted by the user based on measurements from the one or more embedded sensors in the platform.

15. The system of claim 9, comprising four cameras mounted on the exercise rack, the cameras being arranged to capture the angles of a user's elbow joints or knee joint angle.

Fig.1

Fig.2

Fig.3

Fig.4

Optical sensor 202

Optical sensor 204

Optical sensor 206

Camera 210

Camera 212

Camera 214

Camera 216

Force sensor 180

Force sensor 182

Mobile device 150

Server 160

Controller 140

Motor 190

Motor 192

Motor 194

Motor 196

Handle 242

Handle 244

Force sensor 184

Force sensor 186

IMU 187

IMU 188

EMG 189

Fig.5

Fig.6

Fig.7

Fig.8

Fig.9

## Fig.10

Fig.11

| Establish coordinate system and calculate transformation matrix 402 | Determine representation of points under workpiece coordinate system in joint coordinate system 404 | Obtain transformation relation between workpiece coordinate system and joint coordinate system 406 | Use motor dynamics model to control 408 |

Fig.12   400

Fig.13

Fig.14

708

Training load
adaptation

Robot resistance
710

Human posture (e.g.
joint angles) 706

Trainer
702

Receive camera
images 704

700

Fig.15

**806** Layer 3: Physical Barrier Protection Layer

**804** Layer 2: Power Cutoff Protection Layer

**802** Layer 1: Software Protection Layer

800

Fig.16

**EUROPEAN SEARCH REPORT**

Application Number

EP 25 20 0219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 3 183 543 A1 (OXEFIT INC [US]) 30 December 2021 (2021-12-30) * paragraphs [0024] - [0079]; figures * | 1-15 | INV. A63B17/02 A63B21/005 A63B21/078 A63B21/00 A63B23/04 A63B23/12 A63B24/00 A63B21/062 |
| X | US 5 314 394 A (RONAN JOHN J [US]) 24 May 1994 (1994-05-24) | 1-4,8 | |
| Y | * column 2, line 32 - column 3, line 8; figures * | 5 | |
| Y | US 4 795 149 A (PEARSON BRUCE E [US]) 3 January 1989 (1989-01-03) * figure 1 * | 5 | |

TECHNICAL FIELDS SEARCHED (IPC)

A63B

The present search report has been drawn up for all claims

| Place of search | Date of completion of the search | Examiner |
|---|---|---|
| Munich | 5 December 2025 | Squeri, Michele |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 0219

05-12-2025

| Patent document cited in search report | | Publication date | Patent family member(s) | | Publication date |
|---|---|---|---|---|---|
| CA 3183543 | A1 | 30-12-2021 | CA | 3183543 A1 | 30-12-2021 |
| | | | EP | 4168135 A1 | 26-04-2023 |
| | | | US | 2021394011 A1 | 23-12-2021 |
| | | | US | 2023028361 A1 | 26-01-2023 |
| | | | WO | 2021262442 A1 | 30-12-2021 |
| US 5314394 | A | 24-05-1994 | NONE | | |
| US 4795149 | A | 03-01-1989 | NONE | | |

EPO FORM P0459